# EUROPEAN PATENT SPECIFICATION

(11) **EP 1 495 945 B1**
(45) Date of publication and mention of the grant of the patent: **31.12.2008**
(21) Application number: 04103288.9
(22) Date of filing: 09.07.2004
(51) Int. Cl.: B62D 25/14

(54) **A cross member for under the dashboard of a motor vehicle**
Membre transversal de support d'un tableau de bord de véhicule
Querträger für eine Instrumenttafel von einem Kraftfahrzeug

(30) Priority: 09.07.2003 IT TO20030526
(43) Date of publication of application: 12.01.2005
(73) Proprietor: Wagon Automotive S.r.l., 10070 Fiano (IT)
(72) Inventor: BOGGIONE, Roberto, 10070, CIRIE' (IT); PROCOPIO, Domenico, 10090, REANO (IT)
(74) Representative: Jorio, Paolo

(56) References cited:
- EP-A- 0 673 829
- WO-A-03/045763

## Description

The present invention relates to a cross member for under the dashboard of a motor vehicle.

In a motor vehicle, the devices provided for driving (steering wheel and possibly the gear lever) and the instrumentation provided on board the vehicle (instrument board and panel for regulating the on-board systems) are housed in a dashboard, generally made of plastic material, which extends in the transverse direction in the front area of the passenger compartment, in front of the driver and passenger seats. All the wires for supply and control of the instruments, indicating meters and devices of an electrical type carried by the dashboard are gathered together in a harness, which traverses the entire rear surface of the dashboard and is provided with one or more connectors for interfacing with the electrical wiring system of the motor vehicle.

The cross member for under the dashboard is a metal bar located underneath the dashboard in a direction transverse to the direction of travel of the vehicle and has the purpose of providing a support for the dashboard itself, for the devices associated thereto and for the harness of wires.

In particular, it is constrained directly on the body at its own side ends, and supports the devices and the dashboard via brackets welded on its side surface. Known cross members for supporting the dashboard generally consist of a tube, on which the brackets are connected by welding.

The use of cross members obtained from a tube presents some drawbacks.

In the first place, fixing of the brackets to a cylindrical surface requires the use of techniques of seam welding, which are notoriously burdensome in terms of time, investments and operating costs. Furthermore, the cylindrical surface does not provide unique geometrical references for positioning the brackets.

Furthermore, EP-A-0673829 and WO03/045763 disclose respective cross members obtained by roll forming. However, no indication is given relating to the details of the roll forming process.

The purpose of the present invention is to provide a cross member for under the dashboard which will be free from the drawbacks described above.

The above purpose is achieved by a cross member for under the dashboard according to Claim 1.

For a better understanding of the present invention, there is now described a preferred embodiment, purely by way of non-limiting example and with reference to the attached drawings, in which:
- Figure 1 is a perspective view of a cross member for under the dashboard according to the present invention, illustrated in a position of assembly with a dashboard of a motor vehicle;
- Figure 2 is a cross section of the cross member for under the dashboard;
- Figure 3 illustrates the connection between the cross member for supporting the dashboard and a first bracket; and
- Figure 4 illustrates the connection between the cross member for supporting the dashboard and a second bracket.

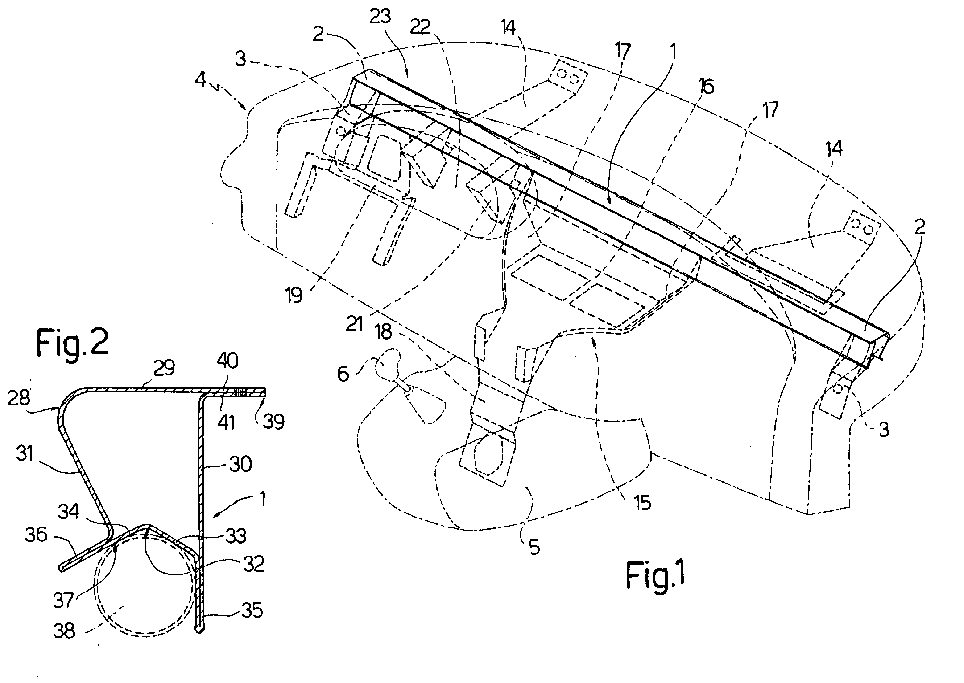

Figure 1 illustrates a cross member for under the dashboard 1 having ends 2 designed to be rigidly constrained to the body of the motor vehicle via a pair of brackets 3. Represented moreover schematically with a dashed line in the figure is a dashboard 4 supported by the cross member 1.

The dashboard 4 integrally comprises a main top portion extending in a transverse direction throughout the width of the passenger compartment of the vehicle and carrying, in a way not illustrated, the steering wheel and the on-board instrumentation (not illustrated). The dashboard 4 further comprises, optionally, a bottom block 5, which is substantially parallelepipedal, houses a gear lever 6, and is arranged in a central and bottom position of the dashboard 4.

Connected to the cross member 1 are various brackets and supporting structures; some examples of said brackets and structures are described in what follows, purely by way of example, it being evident to the person skilled in the branch that the shapes and arrangement of said elements may vary according to the specific requirements of the motor vehicle.

The dashboard 4 is connected to the cross member 1 by means of a pair of supporting brackets 14 that extend in a direction opposite to the block 5 with respect to the cross member 1.

In a direction opposite to the brackets 14 there is connected to the cross member 1, in a median area, a supporting shaped metal structure 15, comprising integrally a horizontal plane surface 16 delimited by a pair of side appendages 17 welded to the cross member 1, and a substantially vertical wall 18, which extends as far as the block 5.

Finally, the cross member 1 carries a support 19 for the steering column and a pair of brackets 21 for carrying an instrument panel 22. The cross member 1 and the brackets welded thereto form, as a whole, a supporting structure 23.

According to the present invention, the cross member 1 is obtained by continuous roll forming starting from a metal strip that is fed longitudinally through a succession of roll forming workstations comprising pairs of shaped rollers, and undergoes folding along lines parallel to the direction of feed. The strip is deformed transversally and, when the side ends are set on top of one another, is welded with techniques which may or may not use weld metal, for example TIG welding or spot welding, thus assuming a closed polygonal profile. The folding angles, which are defined in a plane orthogonal to the direction of feed, depend substantially upon the nature of the metal material used and can even reach 180°, thus rendering possible the forming of closed sections having linear projections. Subsequent operations that enable folding of the bar also according to angles not belonging to a plane orthogonal to the direction of feed are moreover possible.

In particular, the cross member 1 illustrated in Figure 2 comprises a box-like body 28 which has a closed section with substantially rectilinear sides, presenting in particular: a horizontal top side 29; a vertical front side 30; an oblique side 31, which faces the front side 30, converges downwards with respect to the latter, and has a top fillet with the top side 30; and a bottom concave portion 32 set between the front side 30 and the oblique side 31.

The concave portion 32 is defined by a pair of sides 33, 34, arranged to form a V set upside down, and is delimited by a pair of bottom ribs 35, 36, which extend in cantilever fashion from the box-like body 28 between the front side 30 and the bottom side 33 and, respectively, between the oblique side 31 and the bottom side 34, and are each defined by two layers of sheet metal folded at 180° on top of one another.

In particular, the rib 35 is vertical and extends downwards as prolongation of the front side 30; the rib 36 extends in the direction of the bottom side 34, thus diverging downwards with respect to the rib 35.

The ribs 35, 36 delimit, together with the concave portion 32, a seat 37 which houses a harness 38 of electrical wires, which extends longitudinally, in use, underneath the dashboard 4 and is designed to interconnect electrical instruments and devices of the dashboard itself with the wiring system of the vehicle.

Finally, the cross member 1 comprises a closing edge 39, which extends horizontally starting from a top end of the front side 30 and substantially along the prolongation of the top side 29, and comprises a first side edge 40 and a second side edge 41 of the strip constituting the cross member 1, which are set on top of one another and welded together via spot welding or seam welding, for example by roll-seam welding.

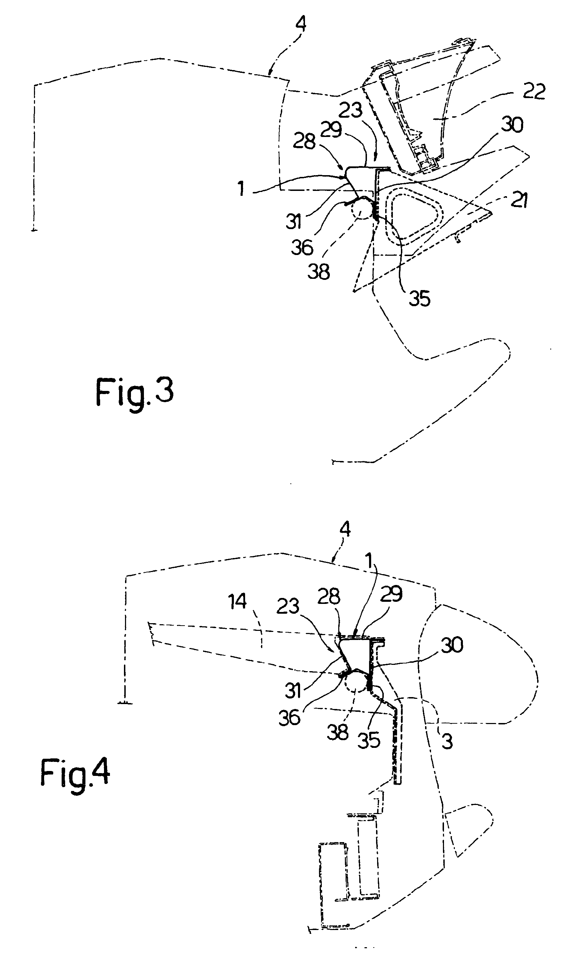

Figures 3 and 4 illustrate some examples of fixing of the brackets 3, 14 and 21 to the cross member 1.

The brackets 3 and 21 are welded to the cross member 1 both on the vertical wall, defined by the front side 30 of the box-like body 28 and by the rib 35, and underneath the closing edge 39. The brackets 14 are conveniently welded to the oblique side 31, to the top side 29, and to the rib 36.

From an examination of the characteristics of the cross member 1 obtained according to the present invention, the numerous advantages that it enables are evident.

In particular, the presence of plane surfaces simplifies the operation of welding of the brackets 3, 14 and 21, enabling seam welding, which is a versatile but costly process, to be replaced by spot welding, which is highly advantageous from an economic standpoint and can be readily automated. Furthermore, positioning of the brackets can be defined uniquely thanks to the contact with two or more plane walls.

Other economically advantageous aspects are represented by the fact that the costs of maintenance of the system of spot welding are low as compared to those of a seam-welding system and in that the use of the technique of forming sectional elements enables equipping of lines that afford high productivity and use a raw material, namely metal strip, which presents contained costs.

The possibility of adopting the technique of forming metal section further enables, by appropriately equipping the rollers that make up the line, a wide range of sectional elements and geometries to be obtained, thus making it possible to optimize the cross section of the cross member 1 according to design parameters, such as mechanical resistance, overall dimension and weight, and taking into account particular operating requirements. In particular, according to the embodiment described, it is possible to produce a section with a concave portion that provides a protective housing and enables more convenient clamping of a harness of wires.

Finally, it is clear that modifications and variations may be made to the cross member for under the dashboard described and illustrated herein, without thereby departing from the scope of the present invention, as defined in the accompanying claims.

In particular, the section of the cross member may be varied, as well as the shape and the number of brackets.

## Claims

1. A cross member (1) for under the dashboard of a motor vehicle, **characterized in that** it comprises a concave portion (32) defining a seat (37) for housing a harness of electric wires (38) and a box-like body (28), which is obtained from a single strip of sheet metal by a process of roll forming and has a cross section with a plurality of rectilinear sides (29, 30, 31, 33, 34), wherein
said box-like body (28) has a closed cross section.

2. The cross member according to Claim 1, **characterized in that** said seat (37) is delimited by two ribs (35, 36) coming out of said box-like body (28).

3. The cross member according to any one of the preceding claims **characterized in that** it comprises a closing edge (39) defined by two edges (40, 41) joined and welded together.

4. A method for the production of a cross member (1) for under the dashboard of a motor vehicle, **characterized in that** it comprises a step of feeding a single strip of sheet metal and a plurality of steps of roll forming said strip to provide a box-like body (28) having a closed cross section with a plurality of rectilinear sides (29, 30, 31, 33, 34) and a concave portion (32) defining a seat (37) for housing a harness of electric wires (38).

5. The method according to Claim 4, **characterized in that** it comprises the step of providing, via at least one of said steps of forming metal section, a pair of edges (40, 41) of said box-like body (28) set up against one another.

6. The method according to Claim 5, **characterized in that** it comprises a step of welding said edges (40, 41) to one another.

7. The method according to Claim 6, **characterized in that** said step of welding is spot welding.

8. The method according to Claim 6, **characterized in that** said step of welding is roll-seam welding.

9. The method according to Claim 4 **characterized in that** at least one of said steps of roll forming comprises the passage of said metal strip through a multiplicity of shaped rollers.

10. A supporting structure (23), **characterized in that** it comprises a cross member (1) according to any one of the preceding claims and supporting brackets (3, 14, 21) co-operating by bearing upon rectilinear portions (29, 30, 31) of the section of said cross member (1).

## Patentansprüche

1. Querstrebe (1) für den Unterbau einer Instrumententafel eines Kraftfahrzeuges, **dadurch gekennzeichnet, dass** diese einen konkaven Bereich (32), welcher eine Auflage (37) zur Aufnahme eines elektrischen Kabelbaumes (38) definiert, und einen kastenartigen Körper (28) aufweist, welcher aus einem einzigen Bandblech durch einen Rollumformprozess erstellt ist und einen Querschnitt mit einer Vielzahl geradliniger Seiten (29, 30, 31, 33, 34) aufweist, wobei der kastenartige Körper (28) einen geschlossenen Querschnitt aufweist.

2. Querstrebe nach Anspruch 1, **dadurch gekennzeichnet, dass** die Auflage (37) durch zwei Rippen (35, 36), welche aus dem kastenartigen Körper (28) austreten, begrenzt ist.

3. Querstrebe nach einem der vorhergehenden Ansprüche, **dadurch gekennzeichnet, dass** diese eine geschlossene Kante (39) aufweist, welche durch zwei Blechkanten (40, 41) definiert ist, die miteinander verbunden und verschweißt sind.

4. Verfahren zur Produktion einer Querstrebe (1) für den Unterbau einer Instrumententafel eines Kraftfahrzeuges, **dadurch gekennzeichnet, dass** dieses einen Verfahrensschritt des Zuführens eines einzigen Bandbleches und eine Vielzahl von Rollumformschritten an dem Bandblech aufweist zum Liefern eines kastenförmigen Körpers (28), der einen geschlossenen Querschnitt mit einer Vielzahl geradliniger Seiten (29, 30, 31, 33,34) und einen konkaven Bereich (32) mit einer Auflage (37) zur Aufnahme eines elektrischen Kabelbaumes (38) aufweist.

5. Verfahren nach Anspruch 4, **dadurch gekennzeichnet, dass** dieses über mindestens einen der Verfahrensschritte des Formens des Profilquerschnittes den Verfahrensschritt des Erstellens eines Paares einander gegenüber angeordneter Blechkanten aufweist.

6. Verfahren nach Anspruch 5, **dadurch gekennzeichnet, dass** dieses einen Verfahrensschritt des miteinander Verschweißens der Blechkanten (40, 41) aufweist.

7. Verfahren nach Anspruch 6, **dadurch gekennzeichnet, dass** der Schritt des Schweißverfahrens als Punktschweißverfahren ausgebildet ist.

8. Verfahren nach Anspruch 6, **dadurch gekennzeichnet, dass** der Schritt des Schweißverfahrens als Rollennahtschweißverfahren ausgebildet ist.

9. Verfahren nach Anspruch 4, **dadurch gekennzeichnet, dass** zumindest einer der Verfahrensschritte des Rollumformprozesses den Durchgang des besagten Blechbandes durch eine Vielzahl an geformten Walzen aufweist.

10. Stützstruktur (23), **dadurch gekennzeichnet, dass** diese eine Querstrebe (1) nach einem der vorhergehenden Ansprüche und Abstützungen (3, 14, 21) aufweist, welche ein Auflager für die geradlinigen Anteile (29, 30, 31) des Abschnitts der besagten Querstrebe (1) bilden.

## Revendications

1. Membre transversal (1) de support du tableau de bord d'un véhicule motorisé, **caractérisé en ce qu'**il comprend une portion concave (32) définissant un siège (37) pour héberger un faisceau de fils électriques (38) et un corps en forme de boîtier (28), qui est obtenu à partir d'une seule bande de tôle métallique par un processus de formage laminé et a une coupe transversale avec une pluralité de côtés rectilignes (29, 30, 31, 33, 34), dans lequel ledit corps en forme de boîtier (28) a une coupe transversale fermée.

2. Membre transversal selon la revendication 1, **caractérisé en ce que** ledit siège (37) est délimité par deux nervures (35, 36) sortant dudit corps en forme de boîtier (28).

3. Membre transversal selon l'une quelconque des revendications précédentes, **caractérisé en ce qu'**il comprend un bord de fermeture (39) défini par deux bords (40, 41) joints et soudés ensemble.

4. Procédé destiné à produire un membre transversal (1) de support du tableau de bord d'un véhicule motorisé, **caractérisé en ce qu'**il comprend une étape consistant à fournir une bande unique de tôle métallique et une pluralité d'étapes de formage laminé de ladite bande pour donner un corps en forme de boîtier (28) ayant une coupe transversale fermée avec une pluralité de côtés rectilignes (29, 30, 31 33, 34) et une portion concave (32) définissant un siège (37) pour héberger un faisceau de files électriques (38).

5. Procédé selon la revendication 4, **caractérisé en ce qu'**il comprend l'étape consistant à fournir, par l'intermédiaire d'au moins l'une desdites étapes de formage de coupe métallique, une paire de bords (40, 41) dudit corps en forme de boîtier (28) placés l'un contre l'autre.

6. Procédé selon la revendication 5, **caractérisé en ce qu'**il comprend une étape consistant à souder lesdits bords (40, 41) l'un sur l'autre.

7. Procédé selon la revendication 6, **caractérisé en ce que** ladite étape de soudage est un soudage par points.

8. Procédé selon la revendication 6, **caractérisé en ce que** ladite étape de soudage est un soudage des aboutements plans par galets

9. Procédé selon la revendication 4, **caractérisé en ce qu'**au moins l'une desdites étapes de formage stratifié comprend le passage de ladite bande de métal à travers une multiplicité de rouleaux formés.

10. Structure de support (23), **caractérisée en ce qu'**elle comprend un membre transversal (1) selon l'une quelconque des revendications précédentes et des tasseaux de support (3, 14, 21) coopérant en s'appuyant sur des portions rectilignes (29, 30, 31) de la coupe dudit membre transversal (1).
